(19) Europäisches Patentamt / European Patent Office / Office européen des brevets

(11) **EP 2 566 154 A1**

(12) **EUROPEAN PATENT APPLICATION**
published in accordance with Art. 153(4) EPC

(43) Date of publication:
**06.03.2013 Bulletin 2013/10**

(51) Int Cl.:
***H04N 5/44*** *(2011.01)*

(21) Application number: **11859656.8**

(22) Date of filing: **09.08.2011**

(86) International application number:
**PCT/CN2011/078145**

(87) International publication number:
**WO 2012/159371 (29.11.2012 Gazette 2012/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Huawei Technologies Co., Ltd.**
**Shenzhen, Guangdong 518129 (CN)**

(72) Inventor: **ZHANG, Haibin**
**Shenzhen**
**Guangdong 518129 (CN)**

(74) Representative: **Pfenning, Meinig & Partner GbR**
**Theresienhöhe 13**
**80339 München (DE)**

(54) **METHOD AND APPARATUS FOR REALISING IMAGE DISPLAY EFFECTS WHEN WEB TV CHANGING CHANNELS**

(57) The embodiments of the present invention provide a method and apparatus for displaying pictures during IPTV channel switching, and refer to the field of Internet Protocol Television the method comprises: waiting to receive a channel switching command sent by a user; when the channel switching command is received, acquiring YUV signal values of a picture that is currently displayed; processing the YUV signal values to make the picture realize a predetermined dynamic effect, and playing the dynamic effect. Through realizing the technical solution of the present invention, many dynamic effects can be displayed during the time delay of IPTV channel switching, so that user's usage experience can be greatly improved.

FIG.1

**Description**

TECHNICAL FIELD

The present invention refers to the field of Internet Protocol Television (IPTV), specially, refers to a method and apparatus for displaying pictures during IPTV channel switching.

DESCRIPTION OF THE RELATED ART

Internet Protocol Television (IPTV) technology improves human-machine interaction, and makes users not simply the passive recipients of information any more. Telecast, as a kind of manner of instant broadcast of information, is still a main source for communities to receive the newest information. Therefore, the experience of the direct broadcast will affect the development of IPTV in a great degree.

Recently, channel switching of IPTV broadcast commonly has a delay of 1.3-1.8s, during which, as a main processing manner, IPTV program is suspended on the current picture of the current video and starts to play the next video in the other channel until an I frame of the video to be switched to arrives, or IPTV program directly waits with a black screen and starts to play the next video in the other channel until an I frame of the video to be switched to arrives.

Presently, all vendors adopt the above manners to process IPTV channel switching, leading to tedious user experience during IPTV channel switching.

SUMMARY OF THE INVENTION

In order to improve user experience during IPTV channel switching, a method and an apparatus for displaying picture during IPTV channel switching are provided in embodiments of the present invention. The technical solutions are as follows.

A method for displaying pictures during IPTV channel switching, comprising:

waiting to receive a channel switching command sent by a user;
when the channel switching command is received, acquiring YUV signals of a picture that is currently displayed, wherein Y is a luminance signal of the picture, U is a red-biased chrominance signal of the picture, and V is a blue-biased chrominance signal of the picture;
processing the YUV signals in order to make the picture realize a predetermined dynamic effect and playing the picture in the dynamic effect, wherein the dynamic effect comprises page-flipping, scrolling, shuttering, or fading-in and fading-out.

An apparatus for displaying pictures during IPTV channel switching, comprising: a receiving module, an acquiring module, and a processing and playing module; wherein,

the receiving module is configured to wait to receive a channel switching command sent by a user;
the acquiring module is configured to, when the channel switching command is received by the receiving module, acquire YUV signals values of a picture that are currently displayed, Y is a luminance signal of the picture, U is a red-biased chrominance signal of the picture, and V is a blue-biased chrominance signal of the picture;
the processing and playing module for processing the YUV signals acquired by the acquiring module in order to make the picture realize a predetermined dynamic effect, and playing the picture in the dynamic effect, wherein the dynamic effect comprises page-flipping, scrolling, shuttering, or fading-in and fading-out.

The embodiments of the present invention have the following beneficial effects: through acquiring YUV signals of a picture that are currently displayed when a channel switching command is received, processing the YUV signals values to make the picture realize a predetermined dynamic effect, and playing the picture in the dynamic effect, many dynamic effects, such as page-flipping, scrolling, shuttering, or fading-in and fading-out can be displayed during the delay of IPTV channel switching, which greatly improves user's experience, and will further increase adherence of users with a product and improve the market competitiveness of the product such as IPTV set-top box.

BRIEF DESCRIPTION OF THE DRAWINGS

For a explicit description of technical solutions of embodiments of the present invention, a brief introduction of accompanying drawings to be used in the description of these embodiments will be given below. Obviously, accompanying drawings described below are merely some embodiments of the present invention, for those skilled in the art, other accompanying drawings can be derived from these ones without any creative efforts.

Fig.1 is a flowchart of a method for displaying picture during IPTV channel switching provided in embodiment 1 of the present invention;
Fig.2 is a flowchart of a method for displaying picture during IPTV channel switching provided in embodiment 2 of the present invention;
Fig.3 is a block diagram of an apparatus for displaying picture during IPTV channel switching provided in embodiment 3 of the present invention.

DETAILED DESCRIPTION OF THE PREFERRED EMBODIMENT

For a better clarity of objects, technical solutions, and advantages of the embodiments of the present invention, a clear and complete description of technical solutions of embodiments of the present invention will be given in connection with accompanying drawings of those embodiments.

Embodiment 1

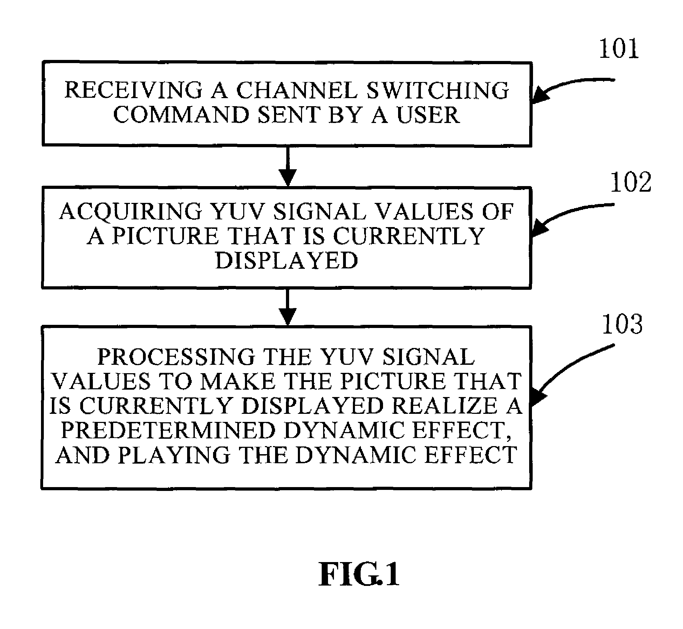

Referring to Fig.1, a method for displaying picture during IPTV channel switching is provided, which in particular comprises the following steps.
Step 101: receive a channel switching command sent by a user.
Step 102: acquire YUV signal values of a picture that is currently displayed, wherein Y is a luminance signal of the picture, U is a red-biased chrominance signal of the picture, and V is a blue-biased chrominance signal of the picture.
Step 103: process the YUV signal values to make the picture realize a predetermined dynamic effect, and the dynamic effect is played, wherein the dynamic effect comprises page-flipping, scrolling, shuttering, or fading-in and fading-out.
This embodiment of the present invention has the following beneficial effects: through acquiring YUV signal values of a picture that is currently displayed, and processing the YUV signal values to make the picture realize a predetermined dynamic effect, and playing the dynamic effect, many dynamic effects, such as page-flipping, scrolling, shuttering, or fading-in and fading-out can be displayed during the time delay of IPTV channel switching, which greatly enhances user's usage experience, and will further increase adherence of users with a product and improve the market competitiveness of the product such as IPTV set-top box.

Embodiment 2

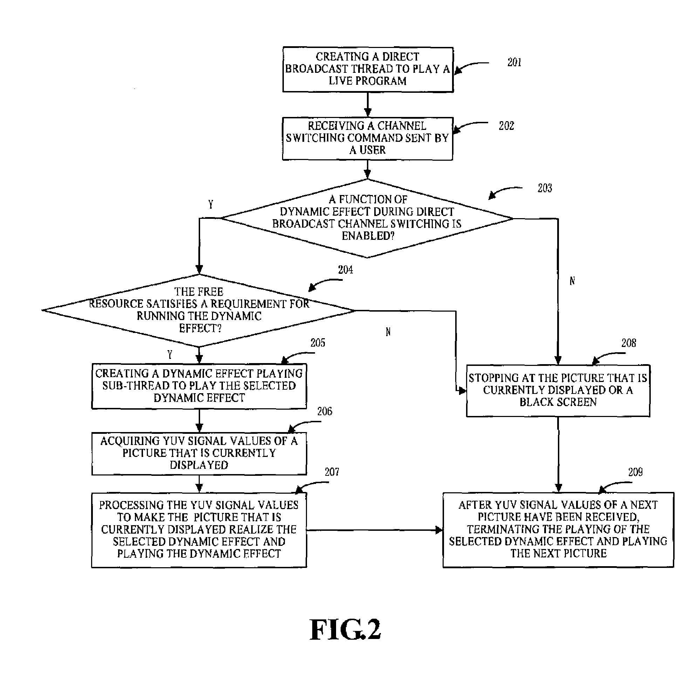

Firstly, a system architecture corresponding to this embodiment will be introduced, the system architecture comprises a camera, a transmitting end and a receiving end, wherein the camera is used to take scene image; the transmitting end is used to transmit the image taken by the camera to the receiving end; the receiving end is used to play various images received. In existing color TV systems, tricolor cameras or color CCD (charge coupled device) cameras are commonly employed to take image of scenes, then after color separation of color images that have been taken, each color is amplified and corrected respectively to obtain RGB data (that is because under the present RGB color model, each color can have one RGB data representation, e.g., bright red can be represented by R value of 255, G value of 0 and B value of 0); after that, the obtained RGB data is transformed into a Y luminance signal and two chrominance signals U and V by a matrix transforming circuit; the transmitting side (for example, a television tower) encodes the luminance signal and the chrominance signals respectively, and sends them on the same channel to the receiving side (for example, IPTV); the receiving side decodes the received code stream and displays it for the user.
Referring to Fig.2, a method for displaying pictures during IPTV channel switching, which can also be executed by an executive subject which is the same as an IPTV set-top box, in particular comprises the following steps.
Step 201: creat a direct broadcast thread to play a live program.
In particular, a user may enter a direct broadcast control page by operating a remote control, select a live program from the direct broadcast control page, send a request for playing the selected live program to an IPTV set-box, which may create a direct broadcast thread to play the live program requested by the user after receiving the request.
Step 202: receive a channel switching command sent by the user.
Step 203:determine whether a function of dynamic effect during direct broadcast channel switching is enabled, if the function of dynamic effect during direct broadcast channel switching is enabled, a step 204 is executed; otherwise, if the function of dynamic effect during direct broadcast channel switching is disabled, a step 208 is executed.
Preferably, a dynamic effect identifier is detected. When the dynamic effect identifier is set to a predetermined value (such as 1), the function of dynamic effect during direct broadcast channel switching is enabled; otherwise, if the dynamic effect identifier is not the predetermined value (such as 0), the function of dynamic effect during direct broadcast channel switching is disabled.

Wherein, the dynamic effect identifier is preset by the vendor of the set-top box when it is delivered.

In addition, users may freely select whether to enable dynamic effects during direct broadcast channel switching, and send a command of enabling or disabling dynamic effects during direct broadcast channel switching to the IPTV set-top box; the IPTV set-top box enables or disables the function of dynamic effects during direct broadcast channel switching according to the received command.

For example, a user may select whether to enable the function of dynamic effects during direct broadcast channel switching by operating a remote control, and send a command of enabling or disabling the function of dynamic effects during direct broadcast channel switching to the IPTV set-top box.

At step 204, a dynamic effect is selected. Herein, the IPTV set-top box selects a dynamic effect for the user randomly, and determines whether the free resource of its CPU (central processing unit) satisfies a service requirement for running the selected dynamic effect.

If the free CPU resource satisfies the service requirement for running the selected dynamic effect, a step 205 is executed.

If the free CPU resource does not satisfy the service requirement for running the selected dynamic effect, a step 208 is executed.

In particular, the size of the current free CPU resource is compared with the resource size required by the selected dynamic effect, and when the free resource is not less than the resource that is required to run the selected dynamic effect, the CPU resource satisfies the service requirement for running the selected dynamic effect; otherwise, the CPU resource does not satisfy the service requirement for running the selected dynamic effect.

Wherein, the dynamic effect comprises: page-flipping, scrolling, shuttering, or fading-in and fading-out.

At step 205, a dynamic effect playing sub-thread is created to play the selected dynamic effect.

At step 206, acquire YUV signal values of a picture that is currently displayed, wherein Y is a luminance signal of the picture, U is a red-biased chrominance signal of the picture, and V is a blue-biased chrominance signal of the picture.

In particular, the user may send a channel switching request for switching a current live program to another live program to the IPTV set-top box by operating a remote control; when receiving the channel switching request, the IPTV set-top box acquires code stream of the picture that is currently displayed from a playing buffer, and parses the acquired code stream to obtain YUV signal values of the picture that is currently displayed.

At step 207, process the obtained YUV signal values to make the picture that is currently displayed realize the selected dynamic effect, and the dynamic effect is played, followed by a step 209.

In particular, this step may display through the following two manners.

The manner 1 in particular comprises the following operations:

Step 207-1: convert the YUV signal values into data in RGB format, wherein R is the value of red, G is the value of green, and B is the value of blue.

In particular, the obtained YUV signal values are converted into the data in RGB format according to preset equations, wherein the preset equations are:

$$Y = \text{floor}(2^{M-8} * (219*(L-Z)/S + 16) + 0.5);$$

$$U = \text{clip3}(0, 2^{M-1}, \text{floor}(2^{M-8} * (112*(B-L) / ((1-Kb)*S) + 128) + 0.5));$$

$$V = \text{clip3}(0, 2^{M-1}, \text{floor}(2^{M-8} * (112*(R-L) / ((1-Kr)*S) + 128) + 0.5));$$

$$L = Kr * R + Kb * B + (1 - Kr - Kb) * G;$$

wherein, Kr and Kb are two constants, Kr = 0.2126Kb = 0.0722, or Kr = 0.299Kb = 0.114;
M is the number of the bits of a YUV signal value, and generally M>=8;
Z is a black level variable, and generally Z is set to 0 or 16*2;
S is a scaling variable, and generally is set to 255 or 219*2.
At step 207-2: fill the data in RGB format into a predetermined memory area "surface".

At step 207-3: in the memory area "surface", process the data in RGB formatto obtain picture data of one picture having the dynamic effect and a process number is increased by 1, wherein the process number has an original value of 0.

Wherein, processing the data in RGB format to obtain the picture data of one picture having the dynamic effect comprises:

dividing the data in RGB format into several data blocks; processing the data in RGB format in part of the data blocks, including multiplying the data in RGB format in part of the data blocks with a predetermined scaling coefficient, filling them with a transparent color, performing compression or symmetrical transform on them, and the processed data in part of the data blocks and unprocessed data in part of the data blocks construct the frame data of one picture having the dynamic effect.

At step 207-4: determine whether the process number reaches a predetermined threshold.

At step 207-5, when the process number is not greater than the predetermined threshold, copy the picture frame data to a display layer area "framebuffer" to display, and returns to step 207-3, until the process number is greater than the predetermined threshold.

Now, the process of steps 207-3 to 207-5 will be described with an example.

Herein, when the selected dynamic effect is up-and-down shuttering and the height of the IPTV screen is 500 pixels, the IPTV screen is divided into 5 blocks from top to bottom equally, each block is 100 pixels in height, and the process number is 10.

In the memory area "surface", one tenth of the data of each data block of 100 pixels high is filled with a transparent color, then respective processed data blocks are moved as a whole to the display layer area "framebuffer" to display, and such process is repeated by 10 times to realize the dynamic effect of up-and-down shuttering.

As a second manner, an API corresponding to a predetermined dynamic effect is obtained through searching a dynamic effect database.

The YUV signal values are processed through invoking the API to make the picture realize the predetermined dynamic effect, and the dynamic effect is played.

Herein, methods for implementing various dynamic effects are encapsulated as API interfaces and stored in a dynamic effect database in advance. As such, it is only needed to invoke a corresponding API when a certain dynamic effect is to be realized on a display screen by an IPTV set-top box, such that the realization of dynamic effect is more convenient and more effective.

At step 208, the picture that is currently displayed is stopped at or a black screen is displayed.

At step 209, after receiving picture data of a next picture, terminate the playing of the selected dynamic effect, and play the next picture.

The embodiment of the present invention has the following beneficial effects: through realizing a technical solution of acquiring YUV signal values of a picture that is currently displayed when receiving a channel switching command, processing the YUV signal values to make the picture realize a predetermined dynamic effect and playing the dynamic effect, many dynamic effects, such as page-flipping, scrolling, shuttering, or fading-in and fading-out, can be displayed during the time delay of IPTV channel switching, which greatly enhances user's usage experience, and will further increase adherence of users with the product and improve the market competitiveness of the products such as IPTV set-top box.

Embodiment 3

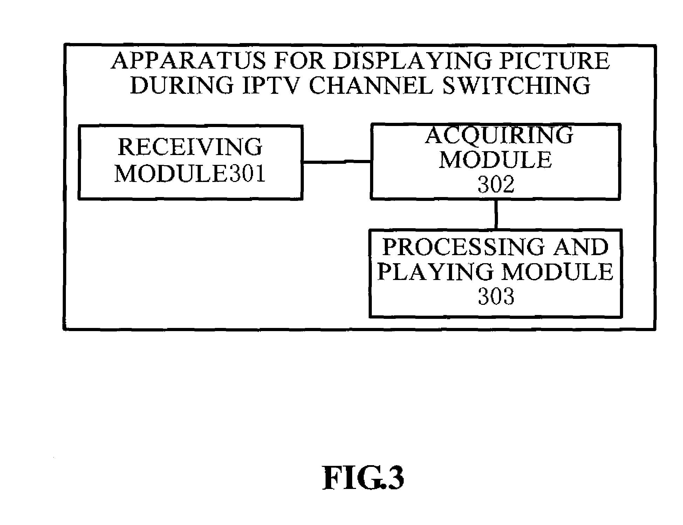

Referring to Fig.3, an apparatus for displaying pictures during IPTV channel switching is provided, which is in particular the set-top box of the method embodiment and comprises: a receiving module 301, an acquiring module 302 and a processing and playing module 303; wherein,

the receiving module 301 is used to wait to receive a channel switching command sent by a user;

the acquiring module 302 is used to, when the channel switching command is received by the receiving module 301, acquire YUV signal values of a picture that is currently displayed, Y is a luminance signal of the picture, U is a red-biased chrominance signal of the picture, and V is a blue-biased chrominance signal of the picture;

the processing and playing module 303 is used to process the YUV signal values acquired by the acquiring module 302 to make the picture that is currently displayed realize a predetermined dynamic effect and play the dynamic effect, the dynamic effect comprising page-flipping, scrolling, shuttering, or fading-in and fading-out.

In particular, the processing and playing module 303 comprises:

a format conversion unit, which is used to convert the YUV signal values into data in RGB format, wherein R is the value of red, G is the value of green, and B is the value of blue;

a filling unit, which is used to fill the data in RGB format converted by the format conversion unit into a predetermined memory area;

a processing unit, which is used to, in the predetermined memory area, process the data in RGB format to obtain frame data of one picture having the dynamic effect, and increase a process number by 1, wherein the process number has an original value of 0;

a judging unit, which is used to judge whether the process number has reached a predetermined threshold;

a playing unit, which is used to, when the judging unit judges that the process number is not greater than the predetermined threshold, copy the frame data obtained by the processing unit to a display layer area to display, and notify the processing unit to perform the operation of, in the memory area, processing the data in RGB format to obtain frame data of one picture having the dynamic effect, and increasing a process number by 1, until the process number is larger than the predetermined threshold.

Wherein, the processing unit comprises:

a block-dividing sub-unit, which is used to divide the data in RGB format into several data blocks;

a filling sub-unit, which is used to process the data in RGB format in part of the data blocks, comprising: multiplying the data in RGB format in part of the data blocks with a predetermined scaling coefficient, filling them with a transparent color, performing compression or symmetrical transform on them, and the processed data in part of the data blocks and unprocessed data in part of the data blocks construct the frame data of one picture having the dynamic effect.

The processing and playing module 303 further comprises:

a searching unit, which is used to search a dynamic effect database to obtain an API corresponding to the predetermined dynamic effect;

a processing and playing unit, which is used to invoke the API obtained by the searching unit to process the YUV signal values to make the picture realize the predetermined dynamic effect, and play the dynamic effect.

The apparatus further comprises a processing module, which is used to, after YUV signal values of a next picture are received, terminate the playing of the dynamic effect and play the next picture.

The embodiment of the present invention has the following beneficial effects: through realizing a technical solution of acquiring YUV signal values of a picture that is currently displayed when receiving a channel switching command, processing the YUV signal values to make the picture realize a predetermined dynamic effect and playing the dynamic effect, many dynamic effects, such as page-flipping, scrolling, shuttering, or fading-in and fading-out, can be displayed during the time delay of IPTV channel switching, which greatly enhances user's usage experience, and will further increase adherence of users with the product and improve the market competitiveness of the products such as IPTV set-top box.

Those skilled in the art may appreciate that all or some steps of the above embodiments can be implemented in hardware, or can be implemented by the related hardware instructed by a program, the program can be stored in a computer readable storage medium, which may comprise read-only memory, magnetic disk, or optical disk, etc.

The above description is merely some preferred embodiments of the present invention, and is not used to limit the present invention, any modifications, equivalent alternatives, and improvements within the principle of the present invention are encompassed in the scope of the present invention.

**Claims**

1. A method for displaying pictures during IPTV channel switching, **characterized in that** the method comprises:

receiving (101) a channel switching command sent by a user;

acquiring (102) YUV signal values of a picture that is currently displayed, wherein Y is a luminance signal of the picture, U is a red-biased chrominance signal of the picture, and V is a blue-biased chrominance signal of the picture; and

processing (103) the YUV signal values to make the picture realize a predetermined dynamic effect and playing the dynamic effect, wherein the dynamic effect comprises page-flipping, scrolling, shuttering, or fading-in and fading-out.

2. The method according to claim 1, **characterized in that** said processing the YUV signal values to make the picture realize a predetermined dynamic effect and playing the dynamic effect comprise:

converting the YUV signal values into data in RGB format, wherein R is the value of red, G is the value of green, and B is the value of blue;

filling the data in RGB format into a predetermined memory area;

processing the data in RGB format to obtain picture data of one picture having the dynamic effect in the memory area, and increasing a process number by 1, wherein the process number has an original value of 0;

judging whether the process number has reached a predetermined threshold;

when the process number is not larger than the predetermined threshold, copying the frame data to a display layer area to display, and returning to repeat perform the operation in the memory area, processing the data in RGB format to obtain picture data of one picture having the dynamic effect, and increasing a process number by 1, until the process number is larger than the predetermined threshold.

3. The method according to claim 2, **characterized in that** said processing the data in RGB format comprises:

dividing the data in RGB format into several data blocks;

processing the data in RGB format in part of the data blocks, comprises: multiplying the data in RGB format in part of the data blocks with a predetermined scaling coefficient, filling them with a transparent color and performing compression or symmetrical transform on them, and the processed data in part of the data blocks and the unprocessed data in part of the data blocks construct the picture data of one picture having the dynamic effect.

4. The method according to claim 1, **characterized in that** said processing the YUV signal values to make the picture realize a predetermined dynamic effect and playing the dynamic effect comprise:

searching a dynamic effect database to obtain an API corresponding to the predetermined dynamic effect;

invoking the API to process the YUV signal values to make the picture realize the predetermined dynamic effect and playing the dynamic effect.

5. The method according to claim 1, **characterized in that** the method further comprises:

after YUV signal values of a next picture are received, terminating the playing of the dynamic effect and playing the next picture.

6. An apparatus for displaying pictures during IPTV channel switching, **characterized in that** the apparatus comprises:
a receiving module, an acquiring module, and a processing and playing module;

the receiving module (301) is configured to wait to receive a channel switching command sent by a user;

the acquiring module (302) is conficured to, when the channel switching command is received by the receiving module, acquire YUV signal values of a picture that is currently displayed, wherein Y is a luminance signal of the picture, U is a red-biased chrominance signal of the picture, and V is a blue-biased chrominance signal of the picture;

the processing and playing module (303) is configured to process the YUV signal values acquired by the acquiring module to make the picture realize a predetermined dynamic effect and play the dynamic effect, wherein the dynamic effect comprises page-flipping, scrolling, shuttering, or fading-in and fading-out.

7. The apparatus according to claim 6, **characterized in that** the processing and playing module comprises:

a format conversion unit is configured to convert the YUV signal values into data in RGB format, wherein R is the value of red, G is the value of green, and B is the value of blue;

a filling unit is configured to fill the data in RGB format converted by the format conversion unit into a predetermined memory area;

a processing unit is configured to, in the predetermined memory area, process the data in RGB format to obtain frame data of one picture having the dynamic effect, and increas a process number by 1, wherein the process number has an original value of 0;

a judging unit is configured to judge whether the process number has reached a predetermined threshold;

a playing unit is configured to, when the judging unit judges that the process number is not larger than the predetermined threshold, copy the frame data obtained by the processing unit into a display layer area to display, and notifying the processing unit to perform the operation of, in the predetermined memory area, processing the data in RGB format to obtain picture data of one picture having the dynamic effect, and increasing a process number by 1, until the process number is larger than the predetermined threshold.

8. The apparatus according to claim 7, **characterized in that** the processing unit comprises:

a block-dividing sub-unit is configured to divide the data in RGB format into several data blocks;

a filling sub-unit is configured to process the data in RGB format in part of the data blocks, comprising: multiplying the data in RGB format in part of the data blocks with a predetermined scaling coefficient, filling them with a transparent color, performing compression or symmetrical transform on them, and the processed data in part of the data blocks and unprocessed data in part of the data blocks construct the frame data of one picture having the dynamic effect.

9. The apparatus according to claim 6, **characterized in that** the processing and playing module comprises:

a searching unit is configured to search a dynamic effect database to obtain an API corresponding to the predetermined dynamic effect,

a processing and playing unit is configured to invoke the API obtained by the searching unit to process the YUV signal values to make the picture realize the predetermined dynamic effect, and play the dynamic effect.

10. The apparatus according to claim 6, **characterized in that** the apparatus further comprises: a processing module is configured to, after YUV signal values of a next picture have been received, terminate the playing of the dynamic effect and play the next picture.

101

RECEIVING A CHANNEL SWITCHING
COMMAND SENT BY A USER

102

ACQUIRING YUV SIGNAL VALUES OF
A PICTURE THAT IS CURRENTLY
DISPLAYED

103

PROCESSING THE YUV SIGNAL
VALUES TO MAKE THE PICTURE THAT
IS CURRENTLY DISPLAYED REALIZE A
PREDETERMINED DYNAMIC EFFECT,
AND PLAYING THE DYNAMIC EFFECT

# FIG.1

CREATING A DIRECT
BROADCAST THREAD TO PLAY A
LIVE PROGRAM — 201

RECEIVING A CHANNEL
SWITCHING COMMAND SENT BY
A USER — 202

A FUNCTION OF
DYNAMIC EFFECT DURING DIRECT
BROADCAST CHANNEL SWITCHING IS
ENABLED? — 203

Y

N

THE FREE
RESOURCE SATISFIES A REQUIREMENT FOR
RUNNING THE DYNAMIC
EFFECT? — 204

Y

N

CREATING A DYNAMIC EFFECT PLAYING
SUB-THREAD TO PLAY THE SELECTED
DYNAMIC EFFECT — 205

ACQUIRING YUV SIGNAL VALUES OF A
PICTURE THAT IS CURRENTLY
DISPLAYED — 206

PROCESSING THE YUV SIGNAL VALUES
TO MAKE THE PICTURE THAT IS
CURRENTLY DISPLAYED REALIZE THE
SELECTED DYNAMIC EFFECT AND
PLAYING THE DYNAMIC EFFECT — 207

STOPPING AT THE PICTURE THAT IS
CURRENTLY DISPLAYED OR A
BLACK SCREEN — 208

AFTER YUV SIGNAL VALUES OF A NEXT
PICTURE HAVE BEEN RECEIVED,
TERMINATING THE PLAYING OF THE
SELECTED DYNAMIC EFFECT AND PLAYING
THE NEXT PICTURE — 209

**FIG.2**

APPARATUS FOR DISPLAYING PICTURE DURING IPTV CHANNEL SWITCHING

| RECEIVING MODULE301 | ACQUIRING MODULE 302 |
|---|---|
| | PROCESSING AND PLAYING MODULE 303 |

FIG.3

# INTERNATIONAL SEARCH REPORT

| International application No. |
| --- |
| **PCT/CN2011/078145** |

| A. CLASSIFICATION OF SUBJECT MATTER |
| --- |
| H04N 5/44 (2006.01) i |
| According to International Patent Classification (IPC) or to both national classification and IPC |

| B. FIELDS SEARCHED |
| --- |
| Minimum documentation searched (classification system followed by classification symbols) |
| IPC: H04N |

| Documentation searched other than minimum documentation to the extent that such documents are included in the fields searched |
| --- |

| Electronic data base consulted during the international search (name of data base and, where practicable, search terms used) |
| --- |
| CNABS, CNTXT, CNKI: switch channel, change channel, channel, switch, change, picture, frame, dispaly, YUV, YCrCb, dynamic, transition, interlude, fade-in, RGB, page turn, scroll, window-blinds, times |
| VEN: switch, channel, YUV, YCrCb, RGB, transition, fade, intermediate, display |

| C. DOCUMENTS CONSIDERED TO BE RELEVANT | | |
| --- | --- | --- |
| Category* | Citation of document, with indication, where appropriate, of the relevant passages | Relevant to claim No. |
| X | CN 101426109 A (NOVATEK MICROELECTRONICS CORP.), 06 May 2009 (06.05.2009), description, page 4, paragraph 2 to page 6, $3^{rd}$ to last paragraph, and figure 2B | 1, 4-6, 9, 10 |
| Y | | 2, 3, 7, 8 |
| Y | CN 101686403 A (ALI CORPORATION), 31 March 2010 (31.03.2010), description, page 5, paragraph 6, page 6, paragraph 2, page 8, paragraph 4 to page 9, $3^{rd}$ to last paragraph, and page 10, $1^{st}$ and $2^{nd}$ to last paragraph, and figures 2 and 3 | 2, 3, 7, 8 |
| A | CN 1878249 A (BAI, Feng), 13 December 2006 (13.12.2006), the whole document | 1-10 |
| A | EP 0663769 A1 (THOMSON MULTIMEDIA), 19 July 1995 (19.07.1995), the whole document | 1-10 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 11 April 2012 (11.04.2012) | **03 May 2012 (03.05.2012)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **YAO, Nan** Telephone No.: (86-10) **62411448** |
| --- | --- |

Form PCT/ISA/210 (second sheet) (July 2009)

<table>
<tr><td rowspan="2" colspan="2">**INTERNATIONAL SEARCH REPORT**<br>Information on patent family members</td><td colspan="2">International application No.</td></tr>
<tr><td colspan="2">**PCT/CN2011/078145**</td></tr>
</table>

| Patent Documents referred in the Report | Publication Date | Patent Family | Publication Date |
|---|---|---|---|
| CN 101426109 A | 06.05.2009 | None | |
| CN 101686403 A | 31.03.2010 | CN 101686403 B | 17.08.2011 |
| CN 1878249 A | 13.12.2006 | None | |
| EP 0663769 A1 | 19.07.1995 | DE 69326899 D1 | 02.12.1999 |
| | | ES 2140447 T3 | 01.03.2000 |
| | | EP 0663769 B1 | 27.10.1999 |

Form PCT/ISA/210 (patent family annex) (July 2009)